# EUROPEAN PATENT APPLICATION

(11) **EP 2 213 933 A1**
(43) Date of publication of application: **04.08.2010**
(21) Application number: 09380015.9
(22) Date of filing: 30.01.2009
(51) Int. Cl.: F21S 8/08, F21S 9/03, F21V 23/00, F21W 131/103

(54) **Photovoltaic solar lampposts with network connection**

(71) Applicant: Energias Renovables del Principado, S.A., 33002 Oviedo (ES)
(72) Inventor: Norniella Carreño, Manuel Angel, 33002 Oviedo (Cantabria) (ES)
(74) Representative: Manzano Cantos, Gregorio

(57) **Abstract**

The invention relates to photovoltaic solar lampposts (2) with network connection formed by a redimensioned photovoltaic solar panel (1) connected to the electrical network in series with other lampposts (2) of the same type, their connections converging in an inverter (6) with network connection which will be common for a certain and calculated number of lampposts.

## Description

### Object of the Invention

The present invention consists of a novel photovoltaic lamppost, which lamppost allows the possibility of connecting the photovoltaic energy produced by the panels forming it to the network. This invention has been designed and carried out for the purpose of obtaining the possibility of situating installations for injecting energy into the network in areas where, with the existing technology, this was not possible, as well as obtaining a series of improvements with respect to standard solar lampposts.

A broad description of the invention is the following: it is a photovoltaic lamppost formed of a shaft made of galvanized steel, a photovoltaic solar panel, a high-efficiency LED luminaire and a photovoltaic inverter for injecting the photovoltaic energy into the electrical network. The latter will be common for lampposts according to areas (streets, park, or other public areas).

As mentioned above, the invention provides a series of improvements with respect to conventional solar lampposts, the most important of which are listed below:
- They do not cause light contamination. The design of these lampposts is in accordance with the International Commission on Illumination in relation to light contamination aspects, whereby it can be said that 100% of the light generated will be duly harnessed, some aspects which are prevented, to achieve this, the position of the lampposts must prevent the light from being emitted over the horizontal and be directed only to where it is necessary. Generally, shielded lampposts the luminous flux of which is only directed downwards, are to be used.
- High efficiency. The use of high-power LED technology in itself makes the lamppost cost-effective, since the consumption of the lamppost is reduced at least 40% in comparison with current luminaires. The duration thereof is 60,000 hours, making the investment cost-effective from the point of the replacement.
- Self-sufficiency. The fact that there is a incentive earning for generating power by means of solar panels allows obtaining enough income by means of connecting these panels to the network in order to cover the energy consumed by the lampposts at night. The fact that the list price is much lower than that of selling the energy to the electric company makes the size of the panels which are used much smaller than in a conventional solar lamppost, thus reducing the initial investment cost.
- No contamination. In this type of solar lamppost neither lead nor any other type of batteries will be used, thus eliminating the only contaminating element that existed in this type of installation. In this case it is not necessary to store the energy since it is injected directly into the network.

In addition to the foregoing, it has the advantage that a high investment will not be necessary since the already-existing power lines for the previous lampposts as well as the shafts can be used in some cases.

### Background of the Invention

There is a direct background document relating to the object of the invention since throughout history photovoltaic energy has always been linked to installations for injecting energy into a network, but in the case of solar lampposts, the idea the idea was completely different - they were only designed as isolated installations.

There are currently many companies capable of manufacturing isolated solar lampposts, using the batteries as a storage method with the subsequent problem of environmental contamination involved therewith, as well as the problem of autonomy since for the use of this type of lampposts they will have to be designed with good redimensioning criteria since in the case of several days without light, the battery will not be able to store enough energy for the consumption of the luminaire at night. The investment will thereby further increase due to having to place a larger solar panel and larger set of batteries.

Photovoltaic solar energy is today the new investment for the future, guaranteed by law. The objective of photovoltaic solar installations connected to the network is to produce electrical energy to inject it into the network and to be sold to electric companies. This repays the investment quickly, and then goes on to obtain considerable profits in a short period of time, which in this case are compatible for paying invoices for generating light. These projects and their income are guaranteed by decree law in Spain: ES436/2004, which requires electric companies to buy all the energy produced by said installations.

Photovoltaic solar energy sold to a network today is a business with minimal cost and with hardly any risk since most banks are offering comprehensive financing for this type of business and initiative. That does not include the different grants and subsidies that both the state and the different autonomous political corporations offer.

Current systems therefore have the drawback that they are only valid for isolated installations, unlike this new interpretation with a high degree of innovation and usefulness, the possibility of using a well-known structure for the connection to the network is established, with the resulting advantages that this entails.

By way of reference to the state of the art, Patent PCT2007000051 "Dynamic Solar Tracking System" of ER Automatización, S.A., is hereby mentioned.

### Description of the Invention

The system of the invention has a scheme by means of which a solar lamppost is connected to the network.

It is formed by a galvanized steel shaft on which the solar panel will be anchored (standard solar lamppost); depending on the power of the lamppost, when a number of lampposts reaching the panel power of 3.3 kW is formed an inverter will be installed which will inject the energy produced into the network.

The luminaire used for this use will be a high-power LED type luminaire with the subsequent energy savings it entails.

Another detail of the invention is that the shadow area will be passable for the personnel to perform maintenance tasks.

Another feature of the invention is that the redimensioning of the panels will be optimal for each area, not having to oversize in any case to be able to have the necessary light coverage.

A broader idea of the features of the invention will be provided below when referring to the set of drawings attached to this specification in a schematic manner only by way of example, depicting the preferred and essential details of the patent.

### Brief Description of the Components

In the drawings:

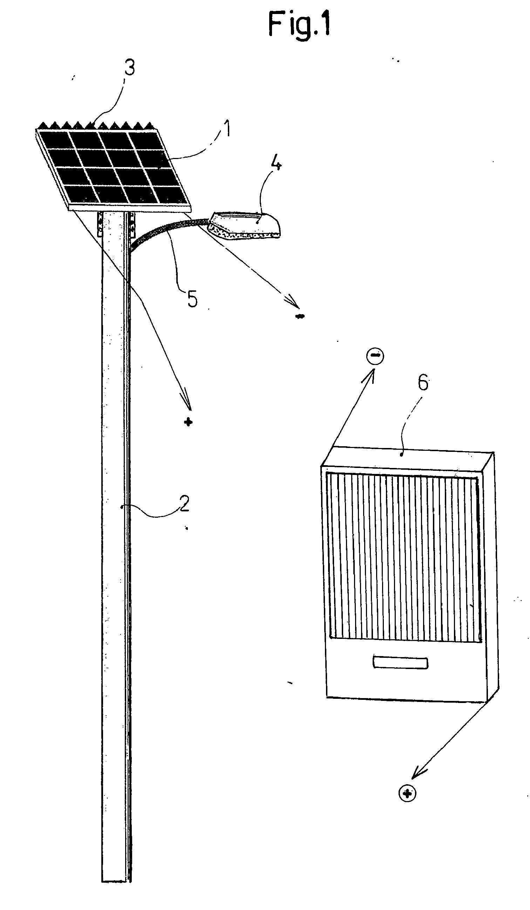

Figure 1 shows the elements forming the photovoltaic solar lamppost connected to the network
Figure 2 is a schematic view of the arrangement in series of different lines of lighting according to the invention.

The photovoltaic solar panel (1) is formed by monocrystalline or polycrystalline silicon, according to each case. It will be dimensioned according to the geographic location thereof, the type of area and the corresponding light needs.

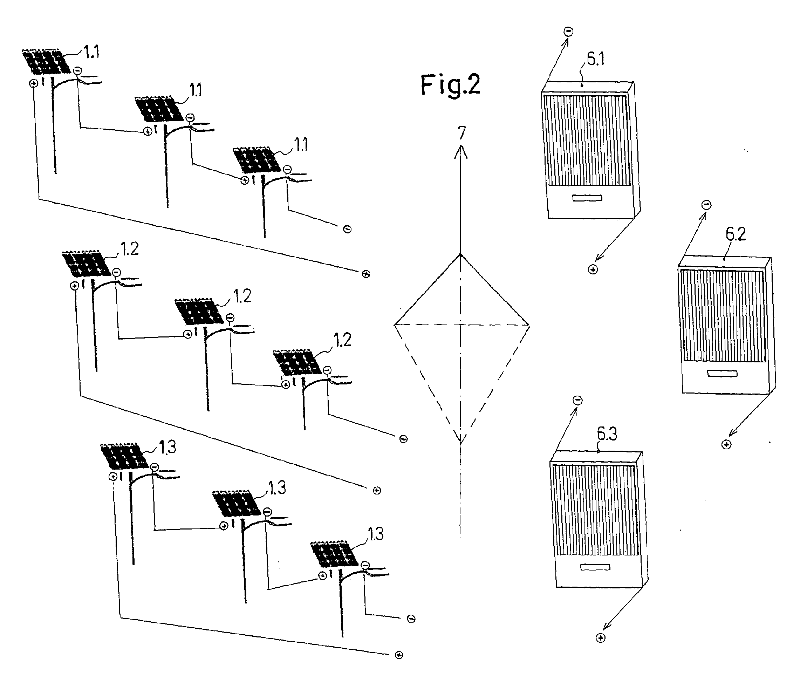

It will be connected directly to the electrical network (7) (Figure 2) and in series with a line of lampposts up to an inverter (6), such as those depicted in the diagram with references (1.1; 1.2; 1.3) and their respective inverters (6.1; 6.2; 6.3).

It will be supported on the post (2) with an articulated joint which will allow orienting and tilting the panel to optimize the output of the installation.

A series of pointed elements (3) will be arranged in the upper perimeter of the panel to prevent the housing of birds and the corresponding organic waste.

The post (2) has a nodular cast iron base with a steel tube shaft, with variable heights and segments, galvanized by immersion in zinc bath. The dimensions of the shaft will depend on the area to be lit and the necessary lighting characteristics for said area. As previously mentioned, said information will be calculated by means of the guidelines laid out by the International Commission on Illumination.

LED type luminaires (4) have been chosen given their high efficiency with respect to other luminaires. Their power will depend on the dimensions of the lamppost and in turn on the areas to be lit.

The term LED is the acronym for Light Emitting Diode. It is a semiconductor device which generates light when it is directly polarized and is traversed by the electric current. Its many features include the following:
- Long life (which involves a reduction in maintenance costs).
- High light efficiency, which involves electric current cost savings (80-100 Lumens per Watt).
- It emits cold light (LEDs do not emit IR or UV light). This involves air-conditioning cost savings.
- The switching on and switching off are immediate.
- The small dimensions of the LED allow innovative designs.

The arm (5) is a piece of galvanized steel with which the luminaire is attached to the post.

The inverter (6) with a network connection will be common for a certain number of lampposts, which number will depend on the power thereof; once the power of the inverter has been reached a unit will be installed. Said inverter (6) will allow the maximum capture of photovoltaic energy, maximizing the output of the photovoltaic system.

### Comparative Photovoltaic Lampposts

If these photovoltaic solar lampposts connected to the network (type A) are compared with common photovoltaic solar lampposts (type B) it can be seen how the dimensions of the photovoltaic field of the first ones are smaller than in the second ones (see Table 1). This is due to the fact that the type A lampposts consume from the network, injecting into the latter the power produced during the day. Taking into account the incentive earnings for the network connection of these systems (RD 1578/2008), and the fact that the list price is much lower than that of selling the energy to the electric company, this gives rises to a reduction of the size of the panels used with respect to a conventional solar lamppost.

**Table 1: Comparative power peak necessary**

| Type of road | LED Power, w | Power of panel in pv lamppost type 1, w | Power of panel in pv lamppost type 2, w |
|---|---|---|---|
| Parks and gardens | 36 | 40 | 150 |
| Commercial streets | 60 | 60 | 240 |
| National highways | 150 | 150 | 630 |
| Motorway exits | 230 | 240 | 970 |

Note: the data in the table relate to lampposts located in Spain; in the event of them being in another country with this type of subsidy, the incentive earnings will be different.

The following premises have been taken into account in the calculation for different types of roads:
Autonomy... 5 days
Discharge depth... 50%
Hours of operation...10
Efficiency... 83%
Safety factor... 1.2
Location... Madrid

### Environmental Contribution

The different forms of contamination currently affecting the world are starting to be seen not as an inevitable consequence of technological and industrial development, but rather as a problem for which a remedy must be sought. One of these forms of pollution is light contamination. This could be defined as the emission of luminous flux from artificial nocturnal sources in intensities, directions or spectral ranges which are unnecessary for performing the activities of the area where the lights are installed. It is seen especially in the increase in the brightness of the night sky caused by the reflection and diffusion of artificial light in the gases and particles of the air due to inefficient and poorly designed outside lighting, using unsuitable lampposts and/or generating light excesses. It originates either by sending the light directly towards the sky or by dispersing the light reflected by the lit surfaces into the atmosphere.

Light contamination is a waste of power which causes serious economic damage, negatively affects the atmosphere, damages the biodiversity, disturbs people, causes a lack of safety on roads, and prevents contemplating and enjoying the cultural heritage such as a starry sky.

To prevent the photovoltaic lampposts connected to the network from enhancing this light contamination, the following considerations have been taken into account in the design thereof, thus improving the quality of environmental illumination.
- Preventing light from being emitted above the horizontal and directing it only to where it is necessary by means of the use of shielded luminaires in which the lamp is installed in a horizontal position and the luminous flux is only directed downwards.
- The lamps used are low-spectrum contaminating and low consumption lamps with a power suitable for the use.
- The area of illumination will be only that area necessary according to the area in question, preventing the light from shining outside such area and making it shine exclusively downwards.
- Adjusting the levels of illumination on the ground to those recommended by the International Commission on Illumination.

Having suitably described the nature of the invention, it must be stated for all intents and purposes that the same is not limited to the exact details of this description, but rather on the contrary, the modifications which are considered appropriate will be introduced therein, provided that the essential features of the same, which are claimed below, are not altered.

## Claims

1. Photovoltaic solar lampposts with network connection which are **characterized by** being formed by a redimensioned photovoltaic solar panel (1), having small dimensions and low power, essentially connected to the electrical network (7) in series with other lampposts (1.1;1.2;1.3) of this same type, the connections of all of them converging in an inverter (6) with a network connection (7) which will be common for a certain and calculated number of lampposts (1.1;1.2;1.3).

2. The photovoltaic solar lampposts with network connection according to claim 1, wherein the photovoltaic panels are **characterized in that** they are supported on a post (2), with an articulated joint which will allow orientating and tilting the panel (1) which, in its upper perimeter of the panel (1), has a series of pointed protection elements (3), and contains LED type luminaires which are connected to the electrical network (7) fed by the panels (1) and are attached to the post (2) by a galvanized steel arm (5).

3. The photovoltaic solar lampposts with network connection according to claim 1, wherein the photovoltaic panel is **characterized by** being formed of monocrystalline or polycrystalline silicon according to each case and will be dimensioned according to the geographic location.

4. The photovoltaic solar lampposts with network connection according to claim 1, wherein the post is **characterized in that** it has a nodular cast iron base with a steel tube shaft, with variable heights and segments, galvanized by immersion in zinc bath.
